# EUROPEAN PATENT APPLICATION

(11) **EP 4 340 497 A1**
(43) Date of publication of application: **20.03.2024**
(21) Application number: 22806255.0
(22) Date of filing: 28.02.2022
(51) Int. Cl.: H04W 72/04

(54) **COMMUNICATION METHOD, DEVICE, AND STORAGE MEDIUM**

(30) Priority: 11.05.2021 CN 202110513412
(71) Applicant: ZTE Corporation, Shenzhen, Guangdong 518057 (CN)
(72) Inventor: LIU, Kun, Shenzhen, Guangdong 518057 (CN); DAI, Bo, Shenzhen, Guangdong 518057 (CN); FANG, Huiying, Shenzhen, Guangdong 518057 (CN)
(74) Representative: Regimbeau
(86) International application number: PCT/CN2022/078167
(87) International publication number: WO 2022/237278

(57) **Abstract**

Provided are a communication method, a device, and a storage medium. The communication method includes: receiving downlink control information (DCI) sent by a second communication node on a physical downlink control channel (PDCCH) in a first control resource set (CORESET); where the DCI includes scheduling information for uplink transmission of a first communication node; the DCI further includes time domain location information of a second CORESET; the first CORESET is a CORESET corresponding to a PDCCH where the DCI including the scheduling information for the uplink transmission of the first communication node is located; and the second CORESET is a CORESET corresponding to a PDCCH where DCI including an uplink cancellation indication (ULCI) is located.

## Description

### TECHNICAL FIELD

The present application relates to the field of communications, for example, to a communication method, a device, and a storage medium.

### BACKGROUND

The New Radio (NR) system offers greater configuration flexibility and a wider application bandwidth compared with previous communication systems. Therefore, terminals having higher capability requirements are needed to support the NR. However, not all scenarios are required to support such terminals with high performance, such as the scenarios in which wearable devices, video surveillance, and industrial wireless sensors are applied, and in these scenarios, an NR terminal with simplified functions can meet the requirements thereof. Such an NR terminal with simplified functions, referred as reduced capability user equipment (RedCap UE), supports a smaller bandwidth and fewer antennas.

In an NR system, a maximum bandwidth of 100 MHz can be configured for an NR UE in the frequency range 1 (FR1), and a maximum bandwidth of 400 MHz can be configured for an NR UE in the frequency range 2 (FR2). A maximum bandwidth of 20 MHz can be configured for a RedCap UE in the FR1, and a maximum bandwidth of 100 MHz can be configured for a RedCap UE in the FR2.

The RedCap UEs can be divided into half-duplex (HD) RedCap UEs and full-duplex (FD) RedCap UEs. For a HD RedCap UE, since the HD RedCap UE cannot perform the downlink data reception and the uplink data transmission at the same time, the HD RedCap UE has to be scheduled by a base station to avoid performing the downlink data reception and the uplink data transmission at the same time. In addition, when the HD RedCap UE cannot avoid such a conflict of performing the downlink data reception and the uplink data transmission at the same time by scheduling by the base station, some solutions are also needed to avoid the conflict.

### SUMMARY

Embodiments of the present application provide a communication method, a device, and a storage medium to avoid the communication conflict between an uplink channel and a downlink channel.

An embodiment of the present application provides a communication method. The communication method is applied by a first communication node and includes the following.

Downlink control information (DCI) sent by a second communication node on a physical downlink control channel (PDCCH) in a first control resource set (CORESET) is received; where the DCI includes scheduling information for uplink transmission of the first communication node; the DCI further includes time domain location information of a second CORESET; the first CORESET is a CORESET corresponding to a PDCCH where the DCI including the scheduling information for the uplink transmission of the first communication node is located; and the second CORESET is a CORESET corresponding to a PDCCH where DCI including an uplink cancellation indication (ULCI) is located.

An embodiment of the present application provides a communication method. The communication method is applied by a second communication node and includes the following.

DCI is sent on a PDCCH in a first CORESET to a first communication node; where the DCI includes scheduling information for uplink transmission of the first communication node; the DCI further includes time domain location information of a second CORESET; the first CORESET is a CORESET corresponding to a PDCCH where the DCI including the scheduling information for the uplink transmission of the first communication node is located; and the second CORESET is a CORESET corresponding to a PDCCH where DCI including a ULCI is located.

An embodiment of the present application provides a communication method. The communication method is applied by a first communication node and includes the following.

In a case where a conflict occurs between a time domain resource allocated to uplink transmission and a time domain resource allocated to downlink reception and a first condition is satisfied, at least one of the following operations is executed within a time period in which the conflict occurs: performing uplink transmission, or performing downlink reception.

An embodiment of the present application provides a communication method. The communication method is applied by a first communication node and includes the following.

In a case where a conflict occurs between a time domain resource allocated to uplink transmission and a time domain resource allocated to downlink reception and a second condition is satisfied, at least one of the following operations is executed within a time period in which the conflict occurs: performing downlink reception, or not performing uplink transmission.

An embodiment of the present application provides a communication device. The communication device includes a communication module, a memory, and one or more processors. The communication module is configured to perform communication exchanging between a first communication node and a second communication node. The memory is configured to store one or more programs. The one or more programs, when executed by the one or more processors, enable the one or more processors to implement the communication method in any one of the aforementioned embodiments.

An embodiment of the present application provides a storage medium. The storage medium is configured to store a computer program, and the computer program, when executed by a processor, implements the method in any one of the aforementioned embodiments.

### BRIEF DESCRIPTION OF DRAWINGS

FIG. 1 is a flowchart of a communication method according to an embodiment of the present application;
FIG. 2 is another flowchart of a communication method according to an embodiment of the present application;
FIG. 3 is yet another flowchart of a communication method according to an embodiment of the present application;
FIG. 4 is still yet another flowchart of a communication method according to an embodiment of the present application;
FIG. 5 is a block diagram of a communication apparatus according to an embodiment of the present application;
FIG. 6 is another block diagram of a communication apparatus according to an embodiment of the present application;
FIG. 7 is yet another block diagram of a communication apparatus according to an embodiment of the present application;
FIG. 8 is still yet another block diagram of a communication apparatus according to an embodiment of the present application; and
FIG. 9 is a structure diagram of a communication device according to an embodiment of the present application.

### DETAILED DESCRIPTION

Embodiments of the present application are described below in conjunction with drawings. The present application will be described in conjunction with embodiments and drawings, and the embodiments described hereinafter are intended to explain the present application.

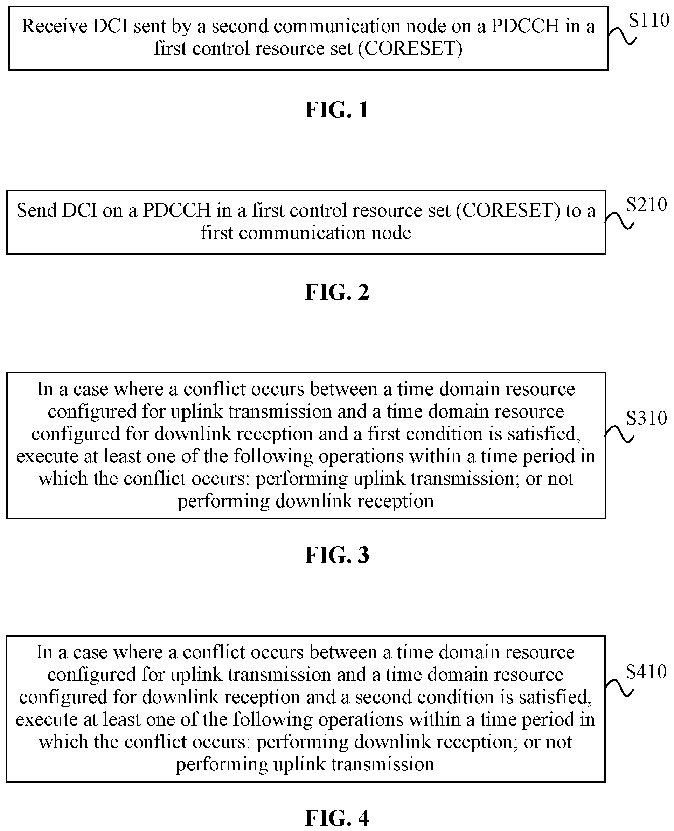

In an embodiment, FIG. 1 is a flowchart of a communication method according to an embodiment of the present application. This embodiment may be executed by a communication device. The communication device may be a first communication node (for example, a user equipment (UE)). As shown in FIG. 1, this embodiment includes S 110.

In S 110, DCI sent by a second communication node on a PDCCH in a first CORESET is received.

The DCI includes scheduling information for uplink transmission of the first communication node. The DCI further includes time domain location information of a second CORESET. The first CORESET is a CORESET corresponding to a PDCCH where the DCI including the scheduling information for the uplink transmission of the first communication node is located, and the second CORESET is a CORESET corresponding to a PDCCH where DCI including a ULCI is located.

In an embodiment, one CORESET includes one or more resource blocks (RBs) in the frequency domain, or includes one or more symbols in the time domain. One CORESET may include one or more PDCCH transmit occasions. The DCI is sent on the PDCCH. The second communication node may be a base station. In an embodiment, the second communication node indicates scheduling information for the uplink transmission of the first communication node through an uplink (UL) grant in the DCI and sends the DCI on the PDCCH in the first CORESET to enable the first communication node to perform uplink transmission based on the received scheduling information for the uplink transmission. It is to be understood that the scheduling information for the uplink transmission may be configured through the UL Grant.

In an embodiment, the time domain location information of the second CORESET is indicated by an offset; where the offset includes one of the following: an offset of a time domain start location of the second CORESET from an end location of the PDCCH where the scheduling information for the uplink transmission of the first communication node is carried; an offset of a time domain start location of the second CORESET from an end location of the first CORESET; a maximum offset of a time domain location of the second CORESET where the first communication node needs to perform PDCCH detection from an end location of the PDCCH where the scheduling information for the uplink transmission of the first communication node is carried; or a maximum offset of a time domain location of the second CORESET where the first communication node needs to perform PDCCH detection from an end location of the first CORESET. In an embodiment, the second CORESET is located after the first CORESET in terms of the dimension of the time location.

In an embodiment, in a case where the DCI sent on the PDCCH in the first CORESET includes first indication information and the first indication information indicates a presence of the time domain location information of the second CORESET or a need to detect the second CORESET, the DCI sent on the PDCCH in the first CORESET includes the time domain location information of the second CORESET.

In an embodiment, the DCI received by the first communication node includes first indication information, where the first indication information is used for indicating that the first communication node needs to detect the second CORESET, and the first communication node detects second indication information, where the second indication information is used for indicating that the first communication node detects an offset of a start location of the second CORESET. In an embodiment, the first communication node obtains the start location of the second CORESET according to the offset, detects the PDCCH in the second CORESET, and obtains the ULCI information on the PDCCH, avoiding the communication conflict between an uplink channel and a downlink channel.

In an embodiment, FIG. 2 is another flowchart of a communication method according to an embodiment of the present application. This embodiment may be executed by a communication device. The communication node may be a second communication node (for example, a base station). As shown in FIG. 2, this embodiment includes S210.

In S210, DCI is sent on a PDCCH in a first CORESET to a first communication node.

The DCI includes scheduling information for uplink transmission of the first communication node.

The DCI further includes time domain location information of a second CORESET. The first CORESET is a CORESET corresponding to a PDCCH where the DCI including the scheduling information for the uplink transmission of the first communication node is located, and the second CORESET is a CORESET corresponding to a PDCCH where DCI including a ULCI is located.

In an embodiment, in a case where the DCI sent on the PDCCH in the first CORESET includes first indication information and the first indication information indicates a presence of the time domain location information of the second CORESET or a need to detect the second CORESET, the DCI sent on the PDCCH in the first CORESET includes the time domain location information of the second CORESET.

In an embodiment, the time domain location information of the second CORESET is indicated by an offset; where the offset includes one of the following: an offset of a time domain start location of the second CORESET from an end location of the PDCCH where the scheduling information for the uplink transmission of the first communication node is carried; an offset of a time domain start location of the second CORESET from an end location of the first CORESET; a maximum offset of a time domain location of the second CORESET where the first communication node needs to perform PDCCH detection from an end location of the PDCCH where the scheduling information for the uplink transmission of the first communication node is carried; or a maximum offset of a time domain location of the second CORESET where the first communication node needs to perform PDCCH detection from an end location of the first CORESET. In an embodiment, the second CORESET is located after the first CORESET in terms of the dimension of the time location.

In an embodiment, the communication processes for uplink transmission and downlink reception, in a case where a communication conflict occurs between a time domain resource for the uplink channel and a time domain resource for the downlink channel, is illustrated using an example where the first communication node is an HD-frequency division duplexing (FDD) RedCap UE and the second communication node is a base station.

In an embodiment, after the HD-FDD RedCap UE receives the DCI sent by the base station, the HD-FDD RedCap UE parses the DCI including a UL grant and carries first indication information in the DCI. In an embodiment, when the first indication information indicates that the UE needs to detect a second CORESET, the UE detects second indication information, where the second indication information is used for indicating that the UE needs to detect an offset of a start location of the second CORESET. In an embodiment, the UE obtains the start location of the second CORESET according to the offset, detects the PDCCH in the second CORESET, and obtains the ULCI information, avoiding the communication conflict between an uplink channel and a downlink channel.

In an embodiment, FIG. 3 is yet another flowchart of a communication method according to an embodiment of the present application. This embodiment may be executed by a communication device. The communication node may be a first communication node (for example, a UE). As shown in FIG. 3, this embodiment includes S310.

In S310, in a case where a conflict occurs between a time domain resource allocated to uplink transmission and a time domain resource allocated to downlink reception and a first condition is satisfied, at least one of the following operations is executed within a time period in which the conflict occurs: performing uplink transmission, or performing downlink reception.

In an embodiment, the time domain resource allocated to the downlink reception may be semi-statically configured or dynamically scheduled. In an embodiment, that the conflict occurs between the time domain resource allocated to the uplink transmission and the time domain resource allocated to the downlink reception means that a resource allocated to the uplink transmission and a resource allocated to the downlink reception overlap or partially overlap in the time domain.

In an embodiment, the time period in which the conflict occurs may be a time period corresponding to a part where the time domain resource allocated to the uplink transmission conflicts with the time domain resource allocated to the downlink reception. In an embodiment, the time period in which the conflict occurs may also include at least a time period corresponding to a part where the time domain resource allocated to the uplink transmission conflicts with the time domain resource allocated to the downlink reception and includes N (N is an integer greater than or equal to 1) complete scheduling units (that is, the minimum scheduling granularity of the uplink transmission) for the uplink transmission. For example, when the scheduling unit for the uplink transmission is a symbol, the time period in which the conflict occurs needs to include the time corresponding to the complete N symbols. In an embodiment, the time period in which the conflict occurs may also include at least a time period corresponding to a part where the time domain resource allocated to the uplink transmission conflicts with the time domain resource allocated to the downlink reception and includes M (M is an integer greater than or equal to 1) complete scheduling units (that is, the minimum scheduling granularity of the downlink transmission) for the downlink reception. For example, when the scheduling unit for the downlink reception is a symbol, the time period in which the conflict occurs needs to include the time corresponding to the complete M symbols.

In an embodiment, the first condition includes: the first communication node is in a random access procedure. In an embodiment, the random access procedure is triggered by the first communication node itself or by the second communication node through a signaling.

In an embodiment, a downlink channel for the downlink reception includes a synchronization signal/physical broadcast channel block (SSB). The SSB carries a downlink synchronization signal (including a primary synchronization signal (PSS) and a secondary synchronization signal (SSS)) and a physical broadcast channel (PBCH, carrying master information block (MIB) information). Since the transmission using multiple beams is supported in the NR, the SSB is also supported to be sent in multiple beam directions.

In an embodiment, the uplink transmission includes at least one of the following: sending a preamble on a transmission occasion (RO) of a physical random access channel (PRACH); a message (Msg) 3 in a random access procedure; retransmission of the Msg3 in a random access procedure; or a physical uplink control channel (PUCCH) where a hybrid automatic repeat request-acknowledgement (HARQ-ACK) message of a Msg4 in a random access procedure is carried.

In an embodiment, in a case where a conflict occurs between a time domain resource allocated to uplink transmission and a time domain resource allocated to downlink reception and the first communication node is in a random access procedure, at least one of the following operations is executed within a time period in which the conflict occurs: sending a preamble on an RO; performing transmission of a Msg 3 in a random access procedure; performing retransmission of the Msg3 in a random access procedure; performing PUCCH transmission of HARQ-ACK information carrying a Msg4 in a random access procedure; or not performing SSB reception.

In an embodiment, FIG. 4 is still yet another flowchart of a communication method according to an embodiment of the present application. This embodiment may be executed by a communication device. The communication node may be a first communication node (for example, a UE). As shown in FIG. 4, this embodiment includes S410.

In S410, in a case where a conflict occurs between a time domain resource allocated to uplink transmission and a time domain resource allocated to downlink reception and a second condition is satisfied, at least one of the following operations is executed within a time period in which the conflict occurs: performing downlink reception, or not performing uplink transmission.

In an embodiment, the time domain resource allocated to the downlink reception may be semi-statically configured or dynamically scheduled. In an embodiment, that the conflict occurs between the time domain resource allocated to the uplink transmission and the time domain resource allocated to the downlink reception means that a resource allocated to the uplink transmission and a resource allocated to the downlink reception overlap or partially overlap in the time domain.

In an embodiment, the time period in which the conflict occurs may be a time period corresponding to a part where the time domain resource allocated to the uplink transmission conflicts with the time domain resource allocated to the downlink reception. In an embodiment, the time period in which the conflict occurs may also include at least a time period corresponding to a part where the time domain resource allocated to the uplink transmission conflicts with the time domain resource allocated to the downlink reception and includes N (N is an integer greater than or equal to 1) complete scheduling units (that is, the minimum scheduling granularity of the uplink transmission) for the uplink transmission. For example, when the scheduling unit for the uplink transmission is a symbol, the time period in which the conflict occurs needs to include the time corresponding to the N complete symbols. In an embodiment, the time period in which the conflict occurs may also include at least a time period corresponding to a part where the time domain resource allocated to the uplink transmission conflicts with the time domain resource allocated to the downlink reception and includes M (M is an integer greater than or equal to 1) complete scheduling units (that is, the minimum scheduling granularity of the downlink transmission) for the downlink reception. For example, when the scheduling unit for the downlink reception is a symbol, the time period in which the conflict occurs needs to include the time corresponding to the complete M symbols.

In an embodiment, the second condition includes one of the following: a downlink channel for the downlink reception includes an SSB; a downlink channel for the downlink reception includes an SSB, and DCI information carried in a PDCCH and received by the first communication node indicates that the SSB changes; a downlink channel for the downlink reception includes an SSB, and the first communication node receives an indication signaling for measuring a reference signal received power (RSRP), where the indication signaling includes SSB resource allocation information for measuring the RSRP, and a conflict occurs between an SSB resource for measuring the RSRP and the time domain resource allocated to the uplink transmission; or the first communication node is in a non-random access procedure.

In an embodiment, the change occurring in the SSB includes one of the following: the number of SSBs changes; MIB information carried in the SSB changes; or the beam directions corresponding to one or more SSBs change.

In an embodiment, in a case where the second condition is satisfied, the uplink transmission is not performed within a time period that is before the time period in which the conflict occurs and whose distance from a start time domain location of the time period in which the conflict occurs is less than or equal to a first time interval.

In a case where the second condition is satisfied, the uplink transmission is not performed within a time period that is after the time period in which the conflict occurs and whose distance from an end time domain location of the time period in which the conflict occurs is less than or equal to a second time interval.

In an embodiment, the first time interval is greater than or equal to a switching time duration from the uplink transmission to the downlink reception, and the second time interval is greater than or equal to a switching time duration from the downlink reception to the uplink transmission.

In an embodiment, the communication process of performing uplink transmission and discarding downlink reception in a case where a communication conflict occurs between a time domain resource for the uplink channel and a time domain resource for the downlink channel is illustrated using an example where the first communication node is an HD-FDD RedCap UE and the second communication node is a base station.

For the HD-FDD RedCap UE, in a case where a conflict occurs between the time domain resource allocated to the uplink transmission and the time domain resource allocated to the downlink reception and the HD-FDD RedCap UE is in a random access procedure, within the time period in which the conflict occurs, the HD-FDD RedCap UE performs the uplink transmission and does not perform the SSB reception. In an embodiment, the uplink transmission performed by the HD-FDD RedCap UE includes: sending a preamble on a PRACH RO; performing transmission of a Msg 3 in a random access procedure; performing retransmission of the Msg3 in a random access procedure; and performing PUCCH transmission of HARQ-ACK information carrying a Msg4 in a random access procedure.

In an embodiment, the communication process of discarding uplink transmission and performing downlink reception in a case where a communication conflict occurs between a time domain resource for the uplink channel and a time domain resource for the downlink channel is illustrated using an example where the first communication node is an HD-FDD RedCap UE and the second communication node is a base station.

For the HD-FDD RedCap UE, in a case where a conflict occurs between the time domain resource allocated to the uplink transmission and the time domain resource allocated to the downlink reception and the HD-FDD RedCap UE is in a non-random access procedure, within the time period in which the conflict occurs, the HD-FDD RedCap UE does not perform the uplink transmission and performs the SSB reception.

For the HD-FDD RedCap UE, in a case where a conflict occurs between the time domain resource allocated to the uplink transmission and the time domain resource allocated to the downlink reception and a downlink channel for the downlink reception of the HD-FDD RedCap UE includes an SSB, the HD-FDD RedCap UE does not perform the uplink transmission and performs the SSB reception.

For the HD-FDD RedCap UE, in a case where a conflict occurs between the time domain resource allocated to the uplink transmission and the time domain resource allocated to the downlink reception, a downlink channel for the downlink reception includes an SSB and the DCI information carried in the PDCCH and received by the HD-FDD RedCap UE indicates that the SSB changes, the HD-FDD RedCap UE does not perform the uplink transmission and performs the SSB reception.

For the HD-FDD RedCap UE, in a case where a conflict occurs between the time domain resource allocated to the uplink transmission and the time domain resource allocated to the downlink reception, a downlink channel for the downlink reception includes an SSB and the HD-FDD RedCap UE receives an indication signaling for performing an RSRP measurement, the HD-FDD RedCap UE does not perform the uplink transmission and performs the SSB reception. The indication signaling includes SSB resource allocation information used for measuring the RSRP, and a conflict occurs between an SSB resource for measuring the RSRP and the time domain resource allocated to the uplink transmission.

In an embodiment, in a case where the HD-FDD RedCap UE performs SSB reception and does not performing uplink transmission, when the uplink transmission is before the time period in which the conflict occurs and the distance from the uplink transmission from a start time domain location of the time period in which the conflict occurs is less than or equal to a first time interval, the uplink transmission is not performed.

In an embodiment, in a case where the HD-FDD RedCap UE performs SSB reception and does not performing uplink transmission, when the uplink transmission is after the time period in which the conflict occurs and the distance from the uplink transmission from an end time domain location of the time period in which the conflict occurs is less than or equal to a second time interval, the uplink transmission is not performed.

In an embodiment, in a case where a downlink channel for the downlink reception includes an SSB, for the HD-FDD RedCap UE, when the resource allocated to the SSB conflicts with the resource allocated to the UL transmission of the HD-FDD RedCap UE in the time domain, for example, when the second condition is satisfied, the HD-FDD RedCap UE performs the SSB reception and discards the UL transmission; otherwise, the HD-FDD RedCap UE performs the UL transmission and discards the SSB reception. In an embodiment, the second condition includes at least one of the following: the DCI information carried in the PDCCH and received by the HD-FDD RedCap UE indicates that the SSB changes; the HD-FDD RedCap UE receives an indication signaling for performing an RSRP measurement, where the indication signaling includes SSB resource allocation information used for measuring the RSRP, and a conflict occurs between an SSB resource for measuring the RSRP and the time domain resource allocated to the uplink transmission; the HD-FDD RedCap UE is in a non-random access procedure; or the uplink transmission of the HD-FDD RedCap UE is not for a Msg3, retransmission of the Msg3 or a PUCCH of HARQ-ACK information of a Msg4 in a random access procedure.

In an embodiment, in a case where the UL transmission sent by the HD-FDD RedCap UE is for a Msg3, retransmission of the Msg3 or a PUCCH of HARQ-ACK information of a Msg4 in a random access procedure, when a resource allocated to the SSB conflicts with a resource allocated to the UL transmission in the time domain, the HD-FDD RedCap UE performs the UL transmission and does not perform the SSB reception.

In a case where the UL transmission sent by the HD-FDD RedCap UE is not for a Msg3, retransmission of the Msg3 or a PUCCH of HARQ-ACK information of a Msg4 in a random access procedure, when a resource allocated to the SSB conflicts with a resource allocated to the UL transmission in the time domain, the HD-FDD RedCap UE receives the SSB and discards the UL transmission.

In an embodiment, in a case where the DCI information carried in the PDCCH channel and received by the HD-FDD RedCap UE indicates that the SSB changes, when a resource allocated to the SSB conflicts with a resource allocated to the UL transmission in the time domain, the UE receives the SSB and does not perform the UL transmission.

In a case where the HD-FDD RedCap UE receives an indication signaling for performing an RSRP measurement and a conflict occurs between an SSB resource for measuring the RSRP and the time domain resource allocated to the uplink transmission, the UE receives the SSB and does not perform the UL transmission.

In a case where the HD-FDD RedCap UE performs the SSB reception and discards the UL transmission, when the UL transmission is before the SSB, the UL transmission is not performed within a time period where the distance from the UL transmission to the start time domain location of the time period in which the conflict occurs is less than or equal to a first time interval; and when the UL transmission is after the SSB, the UL transmission is not performed within a time period where the distance from the UL transmission to the end time domain location of the time period in which the conflict occurs is less than or equal to a second time interval.

In an embodiment, in a case where the uplink transmission is an RO, for the HD-FDD RedCap UE, when a resource allocated to the RO conflicts with a resource allocated to the downlink (DL) transmission of the HD-FDD RedCap UE in the time domain, when the HD-FDD RedCap UE is in a random access procedure, a PRACH Preamble is sent on the RO; and when the HD-FDD RedCap UE is in a non-random access procedure, the DL transmission is performed, and RO transmission is not performed.

In an embodiment, in a case where the uplink transmission is an RO and a downlink channel for the downlink reception includes an SSB, for the HD-FDD RedCap UE, when a resource allocated to the RO conflicts with a resource allocated to the SSB transmission in the time domain, when the DCI information carried in the PDCCH and received by the HD-FDD RedCap UE indicates that the SSB changes or the HD-FDD RedCap UE receives an indication signaling for performing an RSRP measurement, where the indication signaling includes SSB resource allocation information used for measuring the RSRP and a conflict occurs between an SSB resource for measuring the RSRP and the time domain resource allocated to the uplink transmission, the SSB reception is performed. When the HD-FDD RedCap UE is in a random access procedure, a PRACH preamble is sent on the RO.

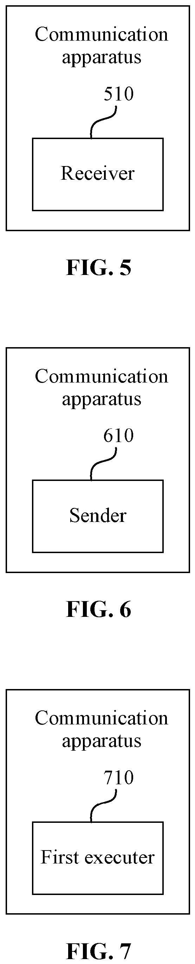

In an embodiment, FIG. 5 is a block diagram of a communication apparatus according to an embodiment of the present application. This embodiment is applied by a communication apparatus. The communication apparatus may be a first communication node. As shown in FIG. 5, the communication apparatus provided in this embodiment includes a receiver 510.

The receiver 510 is configured to receive DCI sent by a second communication node on a PDCCH in a first CORESET; where the DCI includes scheduling information for uplink transmission of the first communication node; the DCI further includes time domain location information of a second CORESET; the first CORESET is a CORESET corresponding to a PDCCH where the DCI including the scheduling information for the uplink transmission of the first communication node is located; and the second CORESET is a CORESET corresponding to a PDCCH where DCI including a ULCI is located.

In an embodiment, the time domain location information of the second CORESET is indicated by an offset; where the offset includes one of the following: an offset of a time domain start location of the second CORESET from an end location of the PDCCH where the scheduling information for the uplink transmission of the first communication node is carried or an offset of a time domain start location of the second CORESET from an end location of the first CORESET.

In an embodiment, in a case where the DCI sent on the PDCCH in the first CORESET includes first indication information and the first indication information indicates the presence of the time domain location information of the second CORESET or the need to detect the second CORESET, the DCI sent on the PDCCH in the first CORESET includes the time domain location information of the second CORESET.

The communication apparatus provided in this embodiment is configured to implement the communication method of the embodiment shown in FIG. 1. The implementation principle and effects of the communication apparatus provided in this embodiment are similar to those of the communication method, and the details will not be repeated herein.

In an embodiment, FIG. 6 is another block diagram of a communication apparatus according to an embodiment of the present application. This embodiment is applied by a communication apparatus. The communication apparatus may be a second communication node. As shown in FIG. 6, the communication apparatus provided in this embodiment includes a sender 610.

The sender 610 is configured to send DCI on a PDCCH in a first CORESET to a first communication node.

The DCI includes scheduling information for uplink transmission of the first communication node. The DCI further includes time domain location information of a second CORESET. The first CORESET is a CORESET corresponding to a PDCCH where the DCI including the scheduling information for the uplink transmission of the first communication node is located, and the second CORESET is a CORESET corresponding to a PDCCH where DCI including a ULCI is located.

In an embodiment, in a case where the DCI sent on the PDCCH in the first CORESET includes first indication information and the first indication information indicates the presence of the time domain location information of the second CORESET or the need to detect the second CORESET, the DCI sent on the PDCCH in the first CORESET includes the time domain location information of the second CORESET.

In an embodiment, the time domain location information of the second CORESET is indicated by an offset; where the offset includes one of the following: an offset of a time domain start location of the second CORESET from an end location of the PDCCH where the scheduling information for the uplink transmission of the first communication node is carried or an offset of a time domain start location of the second CORESET from an end location of the first CORESET.

The communication apparatus provided in this embodiment is configured to implement the communication method of the embodiment shown in FIG. 2. The implementation principle and effects of the communication apparatus provided in this embodiment are similar to those of the communication method, and the details will not be repeated herein.

In an embodiment, FIG. 7 is yet another block diagram of a communication apparatus according to an embodiment of the present application. This embodiment is applied by a communication apparatus. The communication apparatus may be a first communication node. As shown in FIG. 7, the communication apparatus provided in this embodiment includes a first executer 710.

The first executer 710 is configured to, in a case where a conflict occurs between a time domain resource allocated to uplink transmission and a time domain resource allocated to downlink reception and a first condition is satisfied, execute at least one of the following operations within a time period in which the conflict occurs: performing uplink transmission, or performing downlink reception.

In an embodiment, the first condition includes: the first communication node is in a random access procedure.

In an embodiment, a downlink channel of the downlink reception includes an SSB.

In an embodiment, the uplink transmission comprises at least one of the following: sending a preamble on a RO of PRACH; transmission of a Msg 3 in a random access procedure; retransmission of the Msg3 in a random access procedure; or a PUCCH of HARQ-ACK information carrying a Msg4 in a random access procedure.

The communication apparatus provided in this embodiment is configured to implement the communication method of the embodiment shown in FIG. 3. The implementation principle and effects of the communication apparatus provided in this embodiment are similar to those of the communication method, and the details will not be repeated herein.

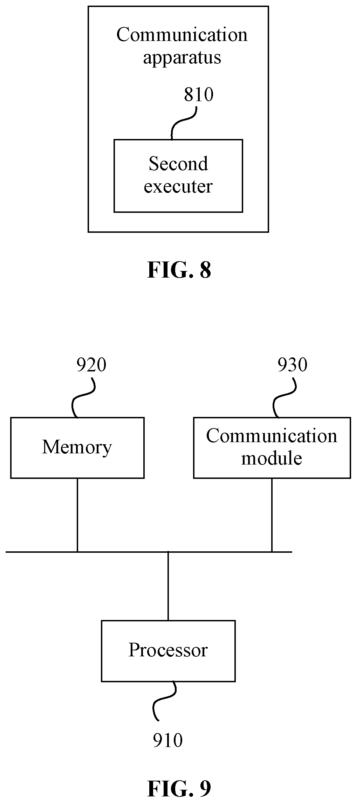

In an embodiment, FIG. 8 is still yet another block diagram of a communication apparatus according to an embodiment of the present application. This embodiment is applied by a communication apparatus. The communication apparatus may be a first communication node. As shown in FIG. 8, the communication apparatus provided in this embodiment includes a second executer 810.

The second executer 810 is configured to, in a case where a conflict occurs between a time domain resource allocated to uplink transmission and a time domain resource allocated to downlink reception and a second condition is satisfied, execute at least one of the following operations within a time period in which the conflict occurs: performing downlink reception, or not performing uplink transmission.

In an embodiment, the second condition includes one of the following: a downlink channel for the downlink reception includes an SSB, and DCI information carried in a PDCCH and received by the first communication node indicates that the SSB changes; a downlink channel for the downlink reception includes an SSB, and the first communication node receives an indication signaling for performing an RSRP measurement, where the indication signaling includes SSB resource allocation information for measuring the RSRP, and a conflict occurs between an SSB resource for measuring the RSRP and the time domain resource allocated to the uplink transmission; or the first communication node is in a non-random access procedure.

In an embodiment, in a case where the second condition is satisfied, the uplink transmission is not performed within a time period that is before the time period in which the conflict occurs and whose distance from a start time domain location of the time period in which the conflict occurs is less than or equal to a first time interval; and in a case where the second condition is satisfied, the uplink transmission is not performed within a time period that is after the time period in which the conflict occurs and whose distance from an end time domain location of the time period in which the conflict occurs is less than or equal to a second time interval.

In an embodiment, the first time interval is greater than or equal to a switching time duration from the uplink transmission to the downlink reception, and the second time interval is greater than or equal to a switching time duration from the downlink reception to the uplink transmission.

The communication apparatus provided in this embodiment is configured to implement the communication method of the embodiment shown in FIG. 4. The implementation principle and effects of the communication apparatus provided in this embodiment are similar to those of the communication method, and the details will not be repeated herein.

In an embodiment, FIG. 9 is a structure diagram of a communication device according to an embodiment of the present application. As shown in FIG. 19, the communication device provided by the present application includes a processor 910, a memory 920, and a communication module 930. The number of processors 910 in the device may be one or more, and one processor 910 is shown as an example in FIG. 9. The number of memories 920 in the device may be one or more, and one memory 920 is shown as an example in FIG. 9. The processor 910, the memory 920, and the communication module 930 in the device may be connected via a bus or in other manners, and the connection via a bus is shown as an example in FIG. 9. In this embodiment, the device may be a first communication node (for example, a UE).

As a computer-readable storage medium, the memory 920 may be configured to store software programs and computer-executable programs and modules such as program instructions/modules (such as the receiver 510 in the communication apparatus) corresponding to the device in any one of the embodiments of the present application. The memory 920 may include a program storage region and a data storage region. The program storage region may store an operating system and an application program required by at least one function, and the data storage region may store data created depending on the use of the device. In addition, the memory 920 may include a highspeed random-access memory, and may also include a non-volatile memory such as at least one disk memory, a flash memory or another non-volatile solid-state memory. In some examples, the memory 920 may include memories which are remotely disposed relative to the processor 910, and these remote memories may be connected to the device via a network. Examples of the preceding network include, but are not limited to, the Internet, an intranet, a local area network, a mobile communication network, and combinations thereof.

The communication module 930 is configured to perform communication exchanging between the first communication node and a second communication node.

In a case where the communication device is the first communication node, the preceding device may be configured to execute the communication method applied by the first communication node provided in any one of the aforementioned embodiments and has corresponding functions and effects.

In a case where the communication device is the second communication node, the preceding device may be configured to execute the communication method applied by the second communication node provided in any one of the aforementioned embodiments and has corresponding functions and effects.

An embodiment of the present application further provides a storage medium including a computer-executable instruction. The computer-executable instruction is used for, when executed by a computer processor, performing a communication method applied by a first communication node, where the method includes: DCI sent by a second communication node on a PDCCH in a first CORESET is received, where the DCI includes scheduling information for uplink transmission of the first communication node; the DCI further includes time domain location information of a second CORESET; the first CORESET is a CORESET corresponding to a PDCCH where the DCI including the scheduling information for the uplink transmission of the first communication node is located; and the second CORESET is a CORESET corresponding to a PDCCH where DCI including a ULCI is located.

An embodiment of the present application further provides a storage medium including a computer-executable instruction. The computer-executable instruction is used for, when executed by a computer processor, performing a communication method applied by a second communication node, where the method includes: DCI is sent on a PDCCH in a first CORESET to a first communication node, where the DCI includes scheduling information for uplink transmission of the first communication node; the DCI further includes time domain location information of a second CORESET; the first CORESET is a CORESET corresponding to a PDCCH where the DCI including the scheduling information for the uplink transmission of the first communication node is located; and the second CORESET is a CORESET corresponding to a PDCCH where DCI including a ULCI is located.

An embodiment of the present application further provides a storage medium including a computer-executable instruction. The computer-executable instruction is used for, when executed by a computer processor, performing another communication method applied by a first communication node, where the method includes: in a case where a conflict occurs between a time domain resource allocated to uplink transmission and a time domain resource allocated to downlink reception and a first condition is satisfied, at least one of the following operations is executed within a time period in which the conflict occurs: performing uplink transmission, or performing downlink reception.

An embodiment of the present application further provides a storage medium including a computer-executable instruction. The computer-executable instruction is used for, when executed by a computer processor, performing yet another communication method applied by a first communication node, where the method includes: in a case where a conflict occurs between a time domain resource allocated to uplink transmission and a time domain resource allocated to downlink reception and a second condition is satisfied, at least one of the following operations is executed within a time period in which the conflict occurs: performing downlink reception, or not performing uplink transmission.

It is to be understood by those skilled in the art that the term user equipment covers any suitable type of wireless user devices, such as mobile phones, portable data processing apparatuses, portable web browsers or vehicle-mounted mobile stations.

In general, the various embodiments of the present application may be implemented in hardware or special-purpose circuits, software, logic or any combination thereof. For example, some aspects may be implemented in hardware while other aspects may be implemented in firmware or software that may be executed by a controller, a microprocessor, or other computing apparatuses, though the present application is not limited thereto.

The embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program steps, may represent interconnected logic circuits, modules, and functions, or may represent a combination thereof. Computer programs may be stored on the memory. The memory may be of any type suitable for a local technical environment and may be implemented using any suitable data storage technology, such as, but not limited to, a read-only memory (ROM), a random-access memory (RAM), and an optical memory apparatus and system (a digital video disc (DVD) or a compact disc (CD)). The computer-readable medium may include a non-transitory storage medium. The data processor may be of any type suitable to the local technical environment such as, but not limited to, a general-purpose computer, a special-purpose computer, a microprocessor, digital signal processing (DSP), an application-specific integrated circuit (ASIC), a field-programmable gate array (FPGA), and a processor based on a multi-core processor architecture.

## Claims

1. A communication method, applied by a first communication node, comprising:
receiving downlink control information (DCI) sent by a second communication node on a physical downlink control channel (PDCCH) in a first control resource set (CORESET);
wherein the DCI comprises scheduling information for uplink transmission of the first communication node;
the DCI further comprises time domain location information of a second CORESET; and
the first CORESET is a CORESET corresponding to a PDCCH where the DCI comprising the scheduling information for the uplink transmission of the first communication node is located; and the second CORESET is a CORESET corresponding to a PDCCH where DCI comprising an uplink cancellation indication (ULCI) is located.

2. The method of claim 1, wherein the time domain location information of the second CORESET is indicated by an offset;
wherein the offset comprises one of the following: an offset of a time domain start location of the second CORESET from an end location of the PDCCH where the scheduling information for the uplink transmission of the first communication node is carried; an offset of a time domain start location of the second CORESET from an end location of the first CORESET; a maximum offset of a time domain location of the second CORESET where the first communication node needs to perform PDCCH detection from an end location of the PDCCH where the scheduling information for the uplink transmission of the first communication node is carried; or a maximum offset of a time domain location of the second CORESET where the first communication node needs to perform PDCCH detection from an end location of the first CORESET.

3. The method of claim 1, wherein in a case where the DCI sent on the PDCCH in the first CORESET comprises first indication information and the first indication information indicates a presence of the time domain location information of the second CORESET or a need to detect the second CORESET, the DCI sent on the PDCCH in the first CORESET comprises the time domain location information of the second CORESET.

4. A communication method, applied by a second communication node, comprising:
sending downlink control information (DCI) on a physical downlink control channel (PDCCH) in a first control resource set (CORESET) to a first communication node;
wherein the DCI comprises scheduling information for uplink transmission of the first communication node;
the DCI further comprises time domain location information of a second CORESET; and
the first CORESET is a CORESET corresponding to a PDCCH where the DCI comprising the scheduling information for the uplink transmission of the first communication node is located; and the second CORESET is a CORESET corresponding to a PDCCH where DCI comprising an uplink cancellation indication (ULCI) is located.

5. The method of claim 1, wherein in a case where the DCI sent on the PDCCH in the first CORESET comprises first indication information and the first indication information indicates a presence of the time domain location information of the second CORESET or a need to detect the second CORESET, the DCI sent on the PDCCH in the first CORESET comprises the time domain location information of the second CORESET.

6. The method of claim 4 or 5, wherein the time domain location information of the second CORESET is indicated by an offset;
wherein the offset comprises one of the following: an offset of a time domain start location of the second CORESET from an end location of the PDCCH where the scheduling information for the uplink transmission of the first communication node is carried; an offset of a time domain start location of the second CORESET from an end location of the first CORESET; a maximum offset of a time domain location of the second CORESET where the first communication node needs to perform PDCCH detection from an end location of the PDCCH where the scheduling information for the uplink transmission of the first communication node is carried; or a maximum offset of a time domain location of the second CORESET where the first communication node needs to perform PDCCH detection from an end location of the first CORESET.

7. A communication method, applied by a first communication node, comprising:
in a case where a conflict occurs between a time domain resource allocated to uplink transmission and a time domain resource allocated to downlink reception and a first condition is satisfied, executing at least one of the following operations within a time period in which the conflict occurs:
performing uplink transmission; or
not performing downlink reception.

8. The method of claim 7, wherein the first condition comprises: the first communication node is in a random access procedure.

9. The method of claim 7, wherein a downlink channel for the downlink reception comprises a synchronization signal/physical broadcast channel block (SSB).

10. The method of claim 7, wherein the uplink transmission comprises at least one of the following:
sending a preamble on a random access channel transmission occasion (RO);
a messages (Msg3) in a random access procedure;
retransmission of the Msg3 in a random access procedure; or
a physical uplink control channel (PUCCH) where a hybrid automatic repeat request-acknowledgement (HARQ-ACK) message of a message4 (Msg4) in a random access procedure is carried.

11. A communication method, applied by a first communication node, comprising:
in a case where a conflict occurs between a time domain resource allocated to uplink transmission and a time domain resource allocated to downlink reception and a second condition is satisfied, executing at least one of the following operations within a time period in which the conflict occurs:
performing downlink reception; or
not performing uplink transmission.

12. The method of claim 11, wherein the second condition comprises one of the following:
a downlink channel for the downlink reception comprises a synchronization signal/physical broadcast channel block (SSB);
a downlink channel for the downlink reception comprises an SSB, and downlink control information (DCI) carried in a physical downlink control channel (PDCCH) and received by the first communication node indicates that the SSB changes;
a downlink channel for the downlink reception comprises an SSB, and the first communication node receives an indication signaling for measuring a reference signal received power (RSRP), wherein the indication signaling comprises SSB resource allocation information for measuring the RSRP, and a conflict occurs between an SSB resource for measuring the RSRP and the time domain resource allocated to the uplink transmission; or
the first communication node is in a non-random access procedure.

13. The method of claim 11, wherein in a case where the second condition is satisfied, the uplink transmission is not performed within a time period that is before the time period in which the conflict occurs and whose distance from a start time domain location of the time period in which the conflict occurs is less than or equal to a first time interval; and
in a case where the second condition is satisfied, the uplink transmission is not performed within a time period that is after the time period in which the conflict occurs and whose distance from an end time domain location of the time period in which the conflict occurs is less than or equal to a second time interval.

14. The method of claim 11, wherein the first time interval is greater than or equal to a switching time duration from the uplink transmission to the downlink reception, and the second time interval is greater than or equal to a switching time duration from the downlink reception to the uplink transmission.

15. A communication device, comprising a communication module, a memory, and at least one processor; wherein
the communication module is configured to perform communication exchanging between a first communication node and a second communication node;
the memory is configured to store at least one program; and
the at least one program, when executed by the at least one processor, enables the at least one processor to implement the communication method of any one of claims 1 to 3, the communication method of any one of claims 4 to 6, the communication method of any one of claims 7 to 10 or the communication method of any one of claims 11 to 14.

16. A storage medium storing a computer program, wherein the computer program, when executed by a processor, implements the communication method of any one of claims 1 to 3, the communication method of any one of claims 4 to 6, the communication method of any one of claims 7 to 10 or the communication method of any one of claims 11 to 14.
